# EUROPEAN PATENT APPLICATION

(11) **EP 2 189 985 A1**
(43) Date of publication of application: **26.05.2010**
(21) Application number: 08831442.2
(22) Date of filing: 18.09.2008
(51) Int. Cl.: G11B 27/10, G10K 15/04, G11B 20/10, G11B 27/034, G11B 27/34

(54) **CONTENTS REPRODUCING DEVICE, AND CONTENTS REPRODUCING METHOD**

(30) Priority: 19.09.2007 JP 2007242622; 30.05.2008 JP 2008143350
(71) Applicant: Sony Corporation, Tokyo 108-0075 (JP)
(72) Inventor: KITAHARA, Yoko, Tokyo 108-0075 (JP); YAMAZAKI, Tatsuya, Tokyo 108-0075 (JP); IHARA, Ryosuke, Tokyo 108-0075 (JP); ASAI, Satoshi, Tokyo 108-0075 (JP)
(74) Representative: Körber, Martin Hans
(86) International application number: PCT/JP2008/067372
(87) International publication number: WO 2009/038225

(57) **Abstract**

The present invention allows a user to enjoyably select a music content, which meets the user's potential likes, for a short period of time without stressing the user. The present invention selects a group of music contents, which should be regarded as objects of reproduction, from among numerous contents, sequentially reproduces and outputs hook-portion data items (A1, B1, and C1) of the group of music contents, inserts a hook switching sound effect, which is expected to exert a user-desired effect, between adjoining ones of the hook-portion data items (A1, B1, and C1), and thus performs partial reproduction processing on the hook portions of the group of music contents. Therefore, the present invention allows the user to recognize what the group of music contents is for a short period of time, and allows the user to enjoyably select a music content, which meets the user's potential likes, for a short period of time while listening to a stream of hook portions and hook switching sound effects, but neither stresses nor bores the user.

## Description

### Technical Field

The present invention relates to a content reproduction apparatus and a content reproduction method, and is preferably applied to, for example, home audio equipment to be used at home.

### Background Art

In the past, it has been a matter of common practice that home audio equipment uses, for example, a shuffle function to sequentially randomly reproduce a large number of music contents stored in a hard disk or music contents stored in a recording medium such as a compact disc (CD).

When a user uses the shuffle function of the home audio equipment, the user has not yet determined a musical composition the user especially wants to listen to, but often wants to search a musical composition, which meets the user's likes, while listening to the music contents being randomly reproduced by the home audio equipment.

What resembles the shuffle function includes a home network over which: data of a so-called hook portion of a musical composition is transmitted to a client; when a listener likes the musical composition, entire musical-composition data is transmitted to the client in response to a request for the entire musical-composition data (refer to, for example, patent document 1).
Patent document 1 refers to JP-A-2003-150173.
   A proposal has been made of a television set which controls channel selection in such a manner that: programs are scanned in ascending order of receiving frequency; and when an Enter key is depressed, a program scanned at that time is fixed to a parent screen (refer to, for example, patent document 2).
Patent document 2 refers to JP-A-9-83897.

In the foregoing home audio equipment having the foregoing constitution, while plural music contents are randomly reproduced by the shuffle function, if a user wants to switch one music content into a subsequent musical content, the user has to perform a depressing manipulation on a tune feed button by himself/herself.

Therefore, in the home audio equipment, the user has to continuously perform the depressing manipulation on the tune feed button many times until the user encounters a music content, which meets the user's likes, among a large number of music contents. It is not user-friendly but is time-consuming. In addition, the user is excessively stressed.

### Disclosure of the Invention

The present invention addresses the foregoing problems, and attempts to propose a content reproduction apparatus and a content reproduction method allowing a user to enjoyably select a content, which meets the user's potential likes, for a short period of time without stressing the user.

In order to accomplish the above object, according to the present invention, a group of contents that should be regarded as objects of reproduction is selected from among plural contents, partial reproduction processing is performed to sequentially reproduce parts of contents belonging to the group of contents, the results of the reproduction performed on the parts of the contents through the partial reproduction processing are sequentially outputted, and an inserted content that exerts a user-desired effect is inserted between each of the parts of the contents, which are sequentially reproduced through partial reproduction processing, and part of a subsequent content.

Therefore, since parts of contents are subjected to partial reproduction processing, what a group of contents is can be recognized by a user for a short period of time. An inserted content that is inserted between each of parts of contents, which are sequentially reproduced through partial reproduction processing, and part of a subsequent content can be listened to by a user. Therefore, the results of execution of the partial reproduction processing can be provided as a stream having the gap between adjoining ones of the parts of the contents, which have been subjected to the partial reproduction processing, filled, but the user will not be bored.

According to the present invention, since parts of contents are subjected to partial reproduction processing, what a group of contents is can be recognized by a user for a short period of time. In addition, an inserted content that is inserted between each of the parts of the contents, which are sequentially reproduced through partial reproduction processing, and part of a subsequent content can be listened to by the user. Therefore, the results of execution of partial reproduction processing can be provided as a stream having the gap between adjoining ones of the parts of the contents, which have been subjected to partial reproduction processing, filled, but the user will not be bored. Eventually, there are provided a content reproduction apparatus and a content reproduction method allowing a user to enjoyably select a content, which meets the user's potential likes, for a short period of time without stressing the user.

### Brief Description of the Drawings

Fig. 1 is a schematic diagram showing the overall configuration of a home audio system;
Fig. 2 is a schematic diagram for use in explaining automatic hook portion reproduction processing;
Fig. 3 include schematic diagrams showing patterns of hook switching sound effects, (A) shows a cross-fade pattern, (B) shows a white noise pattern, and (C) shows a captured voice pattern;
Fig. 4 is a schematic diagram for use in explaining voice that is fetched through a microphone and used as a hook switching sound effect;
Fig. 5 is a schematic diagram showing a pattern of a hook switching sound effect produced in consideration of pitch adjustment;

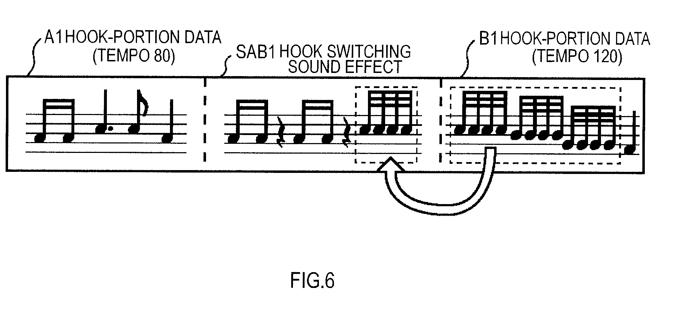

Fig. 6 is a schematic diagram showing a pattern of a hook switching sound effect produced in consideration of tempo adjustment;
Fig. 7 is a schematic block diagram showing the circuitry of home audio equipment;
Fig. 8 is a flowchart for use in explaining an automatic hook portion reproduction processing procedure;
Fig. 9 is a schematic diagram showing a flickering effect interlocked with automatic hook portion reproduction processing;
Fig. 10 is a flowchart for use in explaining an automatic hook portion reproduction processing procedure for inserting a hook switching sound effect that matches a content genre;
Fig. 11 includes schematic diagrams showing patterns of switching effect pictures to be applied to motion picture contents according to another embodiment, (A) shows a cross-fade pattern, (B) shows display of a pre-set or registered message, and (C) shows display of an image that is pre-set or registered through capture;
Fig. 12 is a schematic diagram for use in explaining a pre-set still image to be used as a switching effect picture according to another embodiment;
Fig. 13 is a schematic diagram for use in explaining a motion picture that is used as a switching effect picture according to another embodiment and is fetched through capture;
Fig. 14 is a schematic diagram showing a pattern of a switching effect picture produced in consideration of a tone change;
Fig. 15 is a schematic diagram showing a pattern of a switching effect picture produced in consideration of a moving speed of a subject;
Fig. 16 is a schematic diagram showing a pattern of a switching effect picture produced using a special effect; and
Fig. 17 is a schematic diagram showing a pattern of a switching effect picture having pre-switching and post-switching contents integrated thereinto.

### Best Mode for Carrying Out the Invention

Referring to the drawings, an embodiment of the present invention will be described below.

### (1) Overall configuration of a home audio system

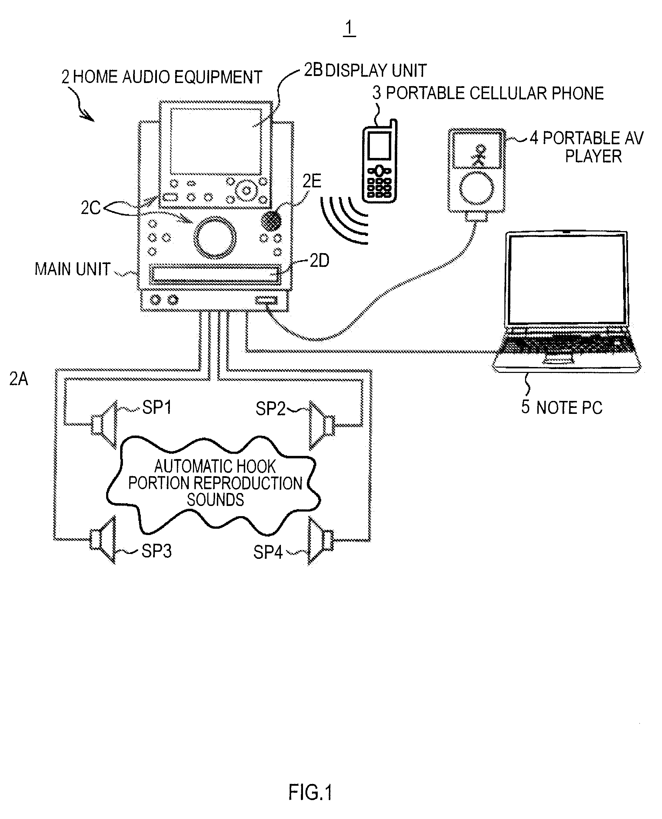

In Fig. 1, reference numeral 1 denotes a home audio system 1 as a whole. The home audio system 1 has a portable cellular phone 3, a portable audiovisual (AV) player 4, and a note-book personal computer (hereinafter, a note PC) 5 connected to home audio equipment 2 serving as a content reproduction apparatus in accordance with the present invention.

In this case, the home audio equipment 2 has a main unit 2A thereof connected by wireless to the portable cellular phone 3 over a wireless local area network (LAN) conformable to Bluetooth (registered trademark) or the Institute of Electrical and Electronic Engineers (IEEE) 802.11b standard. The main unit 2A is connected by wire to the portable AV player 4 and note PC 5.

The home audio equipment 2 has a display unit 2B, which is realized with a liquid crystal display (LCD), disposed on the surface of the main unit 2A. In addition, various kinds of operating keys 2C including operating buttons and rotational operating dials are disposed on the surface of the main unit 2A, and a compact disc (CD)/digital versatile disc (DVD) loading tray 2D is included therein.

The home audio equipment 2 has a microphone 2E, which is used to record external sounds, disposed on the surface of the main unit 2A.

The home audio equipment 2 has a hard disk drive (not shown) in which plural music contents can be stored, a CD/DVD drive (not shown), and a radio/television (TV) tuner incorporated in the main unit 2A thereof.

Therefore, the home audio equipment 2 is designed so that a result of reproduction of a music content by the hard disk drive or CD/DVD drive or a result of reception of a music content by the radio/TV tuner will be outputted through loudspeakers SP1 to SP4.

The home audio equipment 2 has a picture of a video content, which is a result of reception by the radio/TV tuner, displayed on the display unit 2B thereof, and has sounds, which are associated with the picture, outputted through the loudspeakers SP1 to SP4.

In addition, the home audio equipment 2 fetches a music content from the portable cellular phone 3, portable AV player 4, or note PC 5 which is connected to the main unit 2A, reproduces the music content, and outputs sounds, which are the result of the reproduction, through the loudspeakers SP1 to SP4.

At this time, the home audio equipment 2 allows a user to freely select as external equipment, which is an object of fetching from which a music content should be fetched, any or all of the portable cellular phone 3, portable AV player 4, and note PC 5.

For example, when the portable cellular phone 3 and portable AV player 4 are selected as pieces of equipment, that are objects of fetching from which a music content should be fetched, by a user, the home audio equipment 2 can select as objects of reproduction plural music contents, which are stored in the portable cellular phone 3 and portable AV player 4, in addition to plural music contents to be reproduced by the hard disk drive, CD/DVD drive, and radio/TV tuner of the main unit 2A.

Although the home audio equipment 2 can select all of the portable cellular phone 3, portable AV player 4, and note PC 5 as pieces of object-of-fetching equipment concerning a music content, the home audio equipment 2 may not select any of the portable cellular phone 3, portable AV player 4, and note PC 5.

In the home audio equipment 2, if any of the portable cellular phone 3, portable AV player 4, and note PC 5 is not selected as object-of-fetching equipment, plural music contents or video contents fetched from the hard disk drive, CD/DVD drive, and radio/TV tuner of the main unit 2A are regarded as objects of reproduction.

The pieces of object-of-fetching equipment to be connected to the main unit 2A of the home audio equipment 2 are not limited to the portable cellular phone 3, portable AV player 4, and note PC 5 from which a music content can be digitally fetched, but encompasses various pieces of equipment from which a music content or a video content can be fetched on an analog basis.

### (2) Basic principles of automatic hook portion reproduction processing

In the home audio system 1, music contents and video contents exist as objects of reproduction. For brevity's sake, a description will be made by taking for instance a case where hook portions of music contents are automatically subjected to reproduction processing.

In the home audio system 1, when the home audio equipment 2 is connected to the portable cellular phone 3, portable AV player 4, or note PC 5, music contents owned by the pieces of object-of-fetching equipment can be, in addition to plural music contents to be reproduced by the hard disk drive, CD/DVD drive, and radio/TV tuner of the main unit 2A, selected as objects of reproduction. The results of reproduction performed on the music contents can be sequentially outputted through the loudspeakers SP1 to SP4.

At this time, in addition to plural music contents capable of being outputted from the hard disk drive, CD/DVD drive, and radio/TV tuner, music contents owned by the pieces of object-of-fetching equipment are regarded as objects of reproduction. Since the number of music contents regarded as objects of reproduction is numerous, a user often does not know what musical composition the user wants to listen to.

The home audio equipment 2 narrows music contents, which are reproduced by the hard disk drive, CD/DVD drive, and radio/TV tuner, and music contents preserved in the pieces of object-of-fetching equipment, by selecting a group of music contents, which should be user-desired objects of reproduction, from among genres, artists, categories on the basis of pieces of attribute information borne by tags of the music contents.

The home audio equipment 2 samples data items, which are equivalent to so-called "hook" portions of the group of music contents selected based on attributes (hereinafter, called hook-portion data (items)), and sequentially reproduces and outputs the hook portions (hereinafter, called automatic hook portion reproduction processing).

The home audio equipment 2 does not reproduce a large number of music contents on a full-length basis but sequentially reproduces "hook" portions of music contents through automatic hook portion reproduction processing. Whether a musical composition being reproduced meets user's likes can be decided readily for a short period of time.

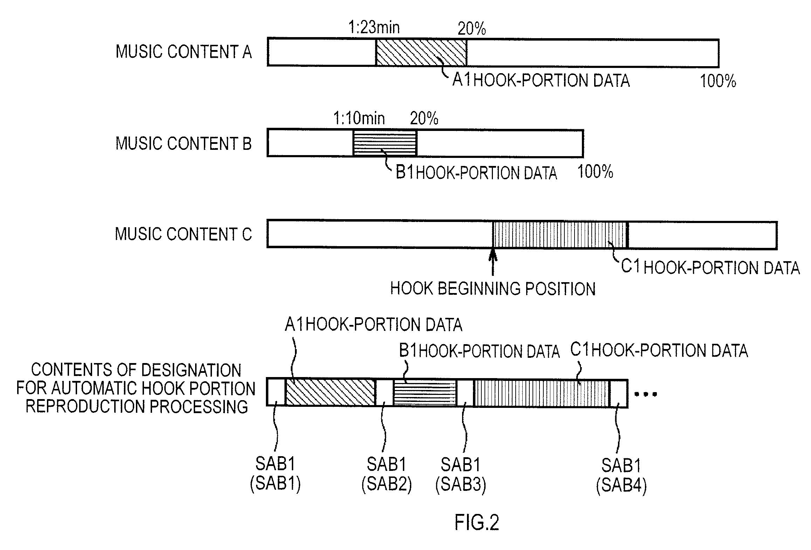

In reality, for example, assume that a group of music contents A, B, and C is, as shown in Fig. 2, selected as objects of reproduction. In this case, as for the music content A, 20 % of the entire content that begins at a time point at which one minute and twenty-three seconds has elapsed since the initiation of reproduction and that is presumably equivalent to a "hook" is designated as hook-portion data A1.

As for the music content B, the home audio equipment 2 designates 20 % of the entire content, which begins at a time point at which one minute and ten seconds has elapsed since the initiation of reproduction and is presumably equivalent to a "hook," as hook-portion data B1.

As for the music content C, the home audio equipment 2 autonomously detects a time point, at which the volume level of the content has abruptly risen to exceed a predetermined threshold, as a hook beginning position, and designates 20 % of the entire content, which begins at the hook beginning position, as hook-portion data C1.

The home audio equipment 2 sorts the hook-portion data A1, hook-portion data B1, and hook-portion data C1, inserts as an inserted content a hook switching sound effect SAB1 of, for example, about 2 sec long (the concrete contents will be described later) into the breaks among the hook-portion data items A1 to C1, and thus designates automatic hook portion reproduction processing. The length of the hook switching sound effect SAB1 is not limited to two seconds, but may be set to 1 sec or 5 sec in line with user's likes.

The home audio equipment 2 sequentially reproduces and outputs the hook-portion data items A1 to C1 by inserting the hook switching sound effect SAB1 in such order as the hook switching sound effect SAB1, the hook-portion data A1, the hook switching sound effect SAB1, the hook-portion data B1, the hook switching sound effect SAB1, the hook-portion data C1, the hook switching sound effect SAB1, etc. according to the contents of designation for automatic hook portion reproduction processing.

At this time, a user need not perform any special manipulation but can sequentially listen to the reproduced sounds of the hook-portion data items A1 to C1. The user can therefore encounter an unexpected music content or a music content which the user potentially wants to listen to, though the user is unconscious of the fact.

Thus, the user can come across a music content, which meets the user's likes, out of a large number of music contents for a short period of time through automatic hook portion reproduction processing performed by the home audio equipment 2. This is one of significant features of automatic hook portion reproduction processing.

At this time, while the user is sequentially listening to the hook-portion data items A1 to C1, if the user wants to reproduce and listen to, for example, the music content of the hook-portion data C1 on a full-length basis, the user should merely snap his/her fingers or move his/her hand so as to communicate the intention to the home audio equipment 2.

During reproduction of the hook-portion data C1, if the home audio equipment 2 in turn recognizes the snap of the user's fingers as a trigger or recognizes a specific hand motion as a trigger, the home audio equipment 2 switches from partial reproduction processing on the hook-portion data C1 to full-length reproduction processing (whole reproduction processing) on the music content C consistent with the hook-portion data C1. This is also one of the significant features of automatic hook portion reproduction processing.

In this case, the hook switching sound effect SAB1 whose contents remain unchanged is inserted as an inserted content into each of the breaks among the hook-portion data items A1 to C1. However, the contents of the hook switching sound effect may not necessarily remain unchanged. Hook switching sound effects SAB1, SAB2, SAB3, SAB4, etc. that are different from one another may be inserted as inserted contents.

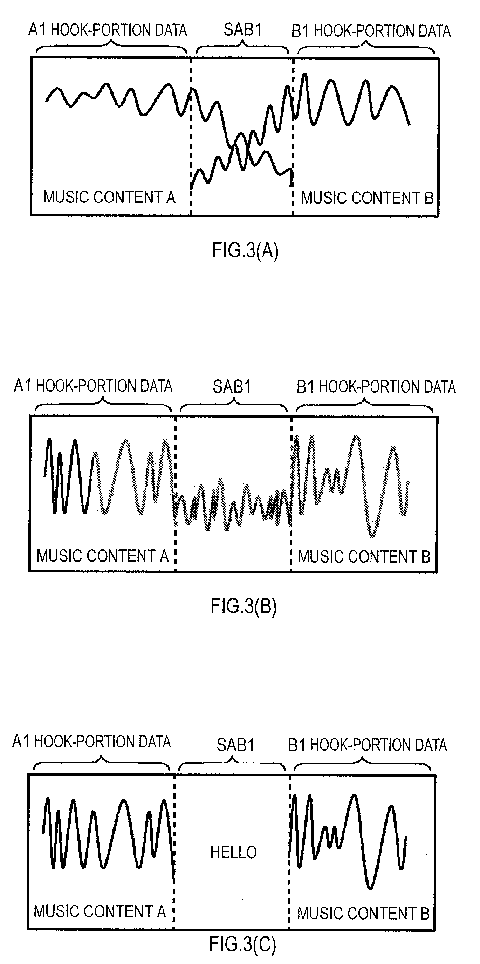

More particularly, as shown in Fig. 3(A), a special sound effect derived from cross-fade is conceivable as an example of the hook switching sound effect SAB1 equivalent to an inserted content to be inserted between the hook-portion data A1 and hook-portion data B1.

The cross-fade is a special sound effect to be employed in order to gradually increase the volume of the next hook-portion data B1 while gradually decreasing the volume of the hook-portion data A1. For a user, it is hard to learn a time point at which musical compositions are switched. The user will therefore be given the impression of continuity that musical compositions are changed at an unknown time point.

As shown in Fig. 3(B), a sound effect caused by a white noise (or a pink noise) is conceivable as an example of the hook switching sound effect SAB1 equivalent to an inserted content that is inserted between the hook-portion data A1 and hook-portion data B1.

The white noise is a noise that is audible as a so-called "hissing" sound. When the white noise is inserted between the musical composition part of the hook-portion data A1 and the musical composition part of the subsequent hook-portion data B1, the white noise allows a user to readily recognize the fact that the musical compositions are switched.

As shown in Fig. 3(C), a sound effect such as voice (hello) which a user has recorded independently using the microphone 2E is conceivable as an example of the hook switching sound effect SAB1 equivalent to an inserted content to be inserted between the hook-portion data A1 and hook-portion data B1.

As the recorded voice, for example, voice whose contents are to introduce the subsequent hook-portion data B1, or voice whose contents are to indicate the timing of switching musical compositions will do. Voice communicating contents a user desires is inserted between the hook-portion data A1 and hook-portion data B1.

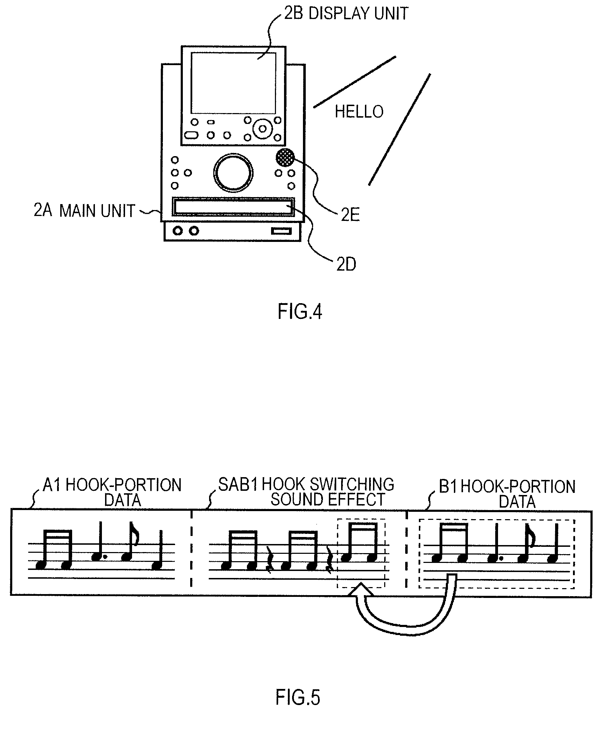

As other conceivable recorded voice, for example, there are a peep, a whistle, a beep, a gag told by a comedian, voice of a straight man, and others. As shown in Fig. 4, the recorded voice is produced by recording external voice using the microphone 2E disposed on the surface of the main unit 2A of the home audio equipment 2.

Further, as the hook switching sound effect SAB1 to be inserted as an inserted content, as shown in Fig. 5, a switching sound effect is conceivably produced to gradually link a pitch in the closing stage of the hook-portion data A1 and a pitch in the opening stage of the subsequent hook-portion data B1.

Specifically, the hook switching sound effect SAB1 that is the above switching sound effect has the pitch of a musical note in a beginning part thereof squared with the pitch in the closing stage of the hook-portion data A1, and has the pitch of a musical note in the ending part thereof squared with the pitch in the opening stage of the hook-portion data B 1.

In this case, the home audio equipment 2 analyzes the pitch in the closing stage of the hook-portion data A1 and the pitch in the opening stage of the hook-portion data B1 according to a so-called 12-tone analysis technology.

What is referred to as the 12-tone analysis technology is to analyze a musical composition two-dimensionally, that is, in terms of a time and a pitch. As for the pitch, twelve pitches (equivalent to sol-fa) are analyzed per octave. In reality, according to the 12-tone analysis technology, musical-composition data is divided into portions equivalent to tunes of 1 sec long along a time base, and energies for frequencies equivalent to twelve tones of one octave are sampled in order to analyze pitches and a tempo (the speed of a musical composition that proceeds).

The home audio equipment 2 is designed so that: by inserting the hook switching sound effect SAB1, which is a switching sound effect, between the hook-portion data A1 and hook-portion data B1, the hook switching sound effect SAB1 allows a user to recognize a shift from the first hook-portion data A1 to the subsequent hook-portion data B1; and the user will have a sense of smooth linkage without undergoing a sense of pitch-based incompatibility in the course of the shift.

Since the pitch in the ending part of the hook switching sound effect SAB1 is squared with the pitch in the opening stage of the hook-portion data B1 to which the hook switching sound effect is shifted, the home audio equipment 2 allows a user to readily imagine the pitch in the subsequent hook-portion data B1.

In the home audio equipment 2, the pitch in the beginning part of the hook switching sound effect SAB1 is squared with the pitch in the closing stage of the immediately preceding hook-portion data A1 whose reproduction has been completed. Therefore, the home audio equipment 2 will not cause a user to have a sense of incompatibility due to an abrupt change from the pitch of the hook-portion data A1 to the pitch of the hook switching sound effect SAB1, but will allow the user to listen to the hook switching sound effect SAB1 in a natural stream of pitches.

Further, as the hook switching sound effect SAB1 equivalent to an inserted content, a switching sound effect produced so that the tempo of a musical composition in the hook-portion data A1 (for example, a tempo 80) will be gradually increased up to the tempo of a musical composition in the subsequent hook-portion data B1 (for example, a tempo 120) is conceivable.

Specifically, the tempo of the beginning part of the hook switching sound effect SAB1 that is the above switching sound effect is identical to the tempo of a bar equivalent to the hook-portion data A1 (tempo 80), and the tempo of the ending part thereof is identical to the tempo of a bar equivalent to the hook-portion data B1 (tempo 120).

Even in this case, the home audio equipment 2 uses the aforesaid 12-tone analysis technology to analyze the tempo of the bar equivalent to the hook-portion data A1 (tempo 80) and the tempo of the bar equivalent to the hook-portion data B1 (tempo 120).

As the home audio equipment 2, since the hook switching sound effect SAB1 that is the foregoing switching sound effect is inserted between the first hook-portion data A1 and the subsequent hook-portion data B1, a user can recognize the shift from the hook-portion data A1 to the hook-portion data B1 owing to the hook switching sound effect SAB1, and will have a sense of smooth linkage without undergoing a sense of tempo-based incompatibility in the course of the shift.

Since the tempo of the ending part of the hook switching sound effect SAB1 is squared with the tempo of the bar equivalent to the hook-portion data B1 to which the hook switching sound effect is shifted, the home audio equipment 2 allows a user to readily imagine the tempo of the subsequent hook-portion data B1.

The home audio equipment 2 squares the tempo of the beginning part of the hook switching sound effect SAB1 with the tempo of the bar equivalent to the immediately preceding hook-portion data A1 whose reproduction has been completed. Accordingly, the home audio equipment 2 allows a user to listen to the hook switching sound effect SAB1 in a natural stream of tempos without undergoing a sense of incompatibility derived from an abrupt change from the tempo of the bar equivalent to the hook-portion data A1 to the tempo of the beginning part of the hook switching sound effect SAB 1.

As mentioned above, since the hook switching sound effect SAB1 is inserted as an inserted content to each of the breaks among the hook-portion data items, the hook-portion data items A1 to C1 are provided as one streamy content but are not outputted while being separated from one another. This is also one of the significant features of automatic hook portion reproduction processing.

In the home audio equipment 2, when mutually different hook switching sound effects SAB1, SAB2, SAB3, SAB4, etc. are inserted as inserted contents but the hook switching sound effect SAB1 whose contents remain unchanged is not inserted as an inserted content, processing described below is carried out.

More particularly, when the subsequent hook-portion data B1 is reproduced after reproduction of the hook-portion data A1, the home audio equipment 2 reads a content genre from metadata appended to the music content B of the hook-portion data B1, and selects and reproduces a hook switching sound effect SAB whose contents meet the content genre.

For example, the home audio equipment 2 decides based on the contents of metadata whether the content genre of the hook-portion data B1 refers to a rock and roll, pop, jazz, or classic. If the content genre refers to a rock and roll, the hook switching sound effect SAB1 is reproduced. If the content genre refers to a pop, the hook switching sound effect SAB2 is reproduced. If the content genre refers to a jazz, the hook switching sound effect SAB3 is reproduced. If the content genre refers to a classic, the hook switching sound effect SAB4 is reproduced.

### (3) Circuitry of the home audio equipment

The circuitry of the home audio equipment 2 that executes the foregoing automatic hook portion reproduction processing will be concretely described below.

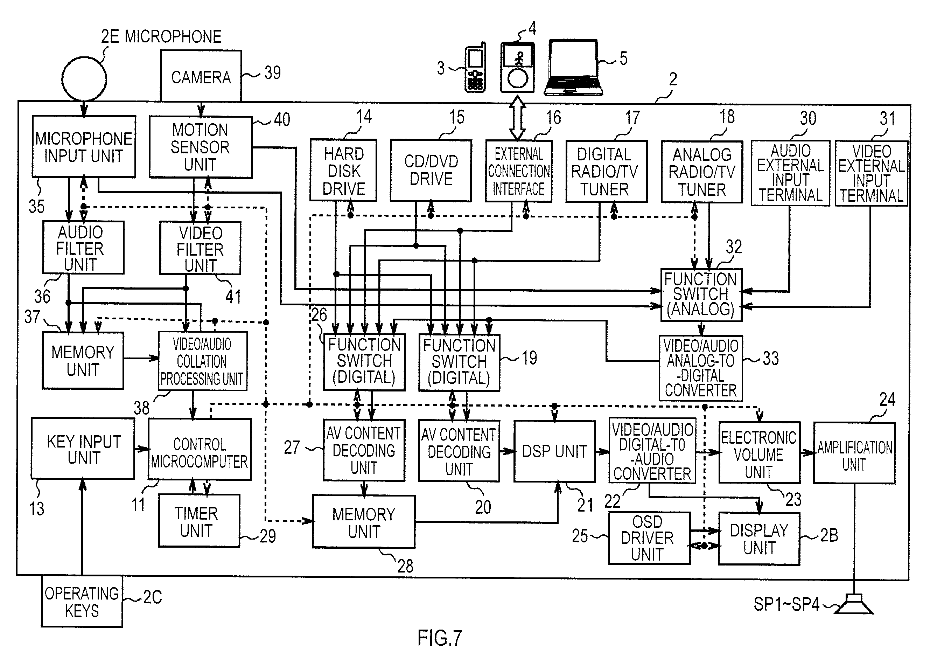

As shown in Fig. 7, the home audio equipment 2 is designed so that a control microcomputer 11 formed with a central processing unit (CPU) will controls the whole of the home audio equipment 2 on a centralized basis according to a basic program stored in a hard disk drive 14.

The home audio equipment 2 is designed so that the control microcomputer 11 will execute AV content reproduction processing according to various application programs stored in the hard disk drive 14, or execute automatic hook portion reproduction processing according to the aforesaid automatic reproduction processing program.

For the home audio equipment 2, solid lines linking circuit blocks in the drawing denote data lines, and dot lines denote control lines along which the control microcomputer 11 extends control.

In reality, the control microcomputer 11 of the home audio equipment 2 recognizes an instruction associated with a user manipulation that is performed on the operating keys 2C disposed on the surface of the main unit 2A and is received by a key input unit 13, and executes various pieces of processing according to the instruction.

The control microcomputer 11 of the home audio equipment 2 drives or controls the hard disk drive 14, the CD/DVD drive 15, a digital radio/TV tuner 17, and an analog radio/TV tuner 18 according to an instruction entered by a user.

Further, the control microcomputer 11 of the home audio equipment 2 drives or controls the portable cellular phone 3, portable AV player 4, or note PC 5, which is connected via an external connection interface 16 compatible with a wireless LAN that conforms to the Universal Serial Bus (USB), Bluetooth (registered trademark), or IEEE 802.11b.

The hard disk drive 14, CD/DVD drive 15, and digital radio/TV tuner 17 are connected to a function switch 19. The portable cellular phone 3, portable AV player 4, or note PC 5 is also connected to the function switch 19 via the external connection interface 16.

The function switch 19 switches pieces of equipment, which should output music contents or video contents to an AV content decoding unit 20 through the function switch 19, according to a control signal fed from the control microcomputer 11.

The function switch 19 outputs music contents or video contents, which are fed from any of the hard disk drive 14, CD/DVD drive 15, digital radio/TV tuner 17, portable cellular phone 3, portable AV player 4, and note PC 5, to the AV content decoding unit 20.

The AV content decoding unit 20 decodes music contents or video contents fed via the function switch 19, and transmits musical-composition data items or video data items, which are the results of decoding, to a digital signal processor (DSP) unit 21.

The DSP unit 21 performs predetermined digital signal processing on the musical-composition data items or video data items, which are fed from the AV content decoding unit 20, and then transmits the resultant data items to a video/audio digital-to-analog converter 22.

The video/audio digital-to-analog converter 22 converts the digital musical-composition data items or video data items into analog musical-composition signals or vide signals, transmits audio portions of the musical-composition signals or video signals to an electronic volume unit 23, and outputs the video signals to a display unit 2B.

An on-screen display (OSD) driver unit 25 is connected to the display unit 2B. A pre-registered message or the like can be displayed on the display unit 2B at the same timing as the output timing of the hook switching sound effect SAB1 under the control of the control microcomputer 11.

As the message to be displayed on the display unit 2B at the same timing as the output timing of the hook switching sound effect SAB1, a message inquiring after a user, for example, "You have not listened to music these days. Won't you listen to music?" or "Raise a volume level a bit, and I will get excited, too." is conceivable.

In this case, the control microcomputer 11 autonomously selects a suitable message from among plural kinds of messages, which are produced in advance, on the basis of operating history information concerning previous reproductions of music contents for the user.

The control microcomputer 11 displays the message on the display unit 2B at the same timing as the output timing of the hook switching sound effect SAB1, and thus interlocks the hook switching sound effect SAB1 with the message.

After designating a volume level for a musical-composition signal, the electronic volume unit 23 outputs audio data, which is associated with the musical-composition signal, at a predetermined volume level through the loudspeakers SP1 to SP4 via an amplification unit 24.

The analog radio/TV tuner 18, an audio external input terminal 30, and a video external input terminal 31 are connected to a function switch 32. Analog music contents or video contents inputted from analog equipment connected to the analog radio/TV tuner 18, audio external input terminal 30, or video external input terminal 31 are transmitted to a video/audio analog-to-digital converter 33.

The video/audio analog-to-digital converter 33 analog-to-digital converts music contents or video contents inputted from the analog radio/TV tuner 18 or external analog equipment, and transmits the resultant contents as digital music contents or video contents to the AV content decoding unit 20 through the function switch 19. Pieces of processing to be performed by components disposed in stages succeeding the AV content decoding unit 20 are identical to the foregoing ones.

The hard disk drive 14, CD/DVD drive 15, and digital radio/TV tuner 17 are also connected to the function switch 26. The portable cellular phone 3, portable AV player 4, or note PC 5 is also connected to the function switch 26 via the external connection interface 16.

Further, the analog radio/TV tuner 18, audio external input terminal 30, and video external input terminal 31 are connected to the function switch 26 via the function switch 32 and video/audio analog-to-digital converter 33.

The function switch 26 is designed to freely switch pieces of object equipments, which should output music contents or video contents through the function switch 26 to the AV content decoding unit 27, according to a control signal fed from the control microcomputer 11.

The AV content decoding unit 27 decodes music contents or video contents fed via the function switch 26, and transmits musical-composition data items or video data items, which are the results of the decoding, to a memory unit 28.

In this case, the memory unit 28 is used in a case where a special sound effect derived from, for example, the aforesaid cross-fade is produced as the hook switching sound effect SAB1, which is inserted between the hook-portion data A1 and next hook-portion data B1, by the DSP unit 21 in the succeeding stage.

In reality, the control microcomputer 11 of the home audio equipment 2 preserves the hook-portion data A1 of the music content A, which is read from, for example, the hard disk drive 14, in the memory unit 28 via the AV content decoding unit 27.

The control microcomputer 11 of the home audio equipment 2 outputs the hook-portion data A1 from the memory unit 28 to the DSP unit 21 at the same timing as the timing of outputting the hook-portion data B1 of the music content B, which is read from the portable cellular phone 3, to the DSP unit 21 via the AV content decoding unit 20.

At this time, the control microcomputer 11 uses, as shown in Fig. 2, 20 % of the entire music content A, which begins at a time point at which one minute and twenty-three seconds measured by a timer unit 29 has elapsed since the initiation of reproduction, as the hook-portion data A1. In addition, the control microcomputer 11 uses 20 % of the entire music content B, which begins at a time point at which one minute and ten seconds measured by the timer unit 29 has elapsed since the initiation of reproduction, as the hook-portion data B1.

In the case of cross-fade, the DSP unit 21 gradually decreases a volume for the hook-portion data A1, gradually increases a volume for the subsequent hook-portion data B1, thus produces a special sound effect as the hook switching sound effect SAB1, and outputs the hook switching sound effect between the hook-portion data A1 and subsequent hook-portion data B1.

When a white noise (or a pink noise) or recorded voice recorded independently in advance using the microphone 2E is adopted as the hook switching sound effect SAB1, the home audio equipment 2 stores the hook switching sound effect SAB1 in the hard disk drive 14 in advance, reads the hook switching sound effect at the timing of necessitating the hook switching sound effect, and inserts the hook switching sound effect between the hook-portion data A1 and subsequent hook-portion data B 1.

In the home audio equipment 2, while the hook-portion data A1, B1, or C1 is subjected to partial reproduction processing, if the musical composition appeals to a user, a sound generated when the user snaps his/her fingers is adopted as a trigger of switching from partial reproduction processing to whole reproduction processing. The sound is collected in advance using the microphone 2E.

The sound generated when the user snaps his/her fingers is stored as finger-snap data, which is used as a reference when the user snaps his/her fingers, from the microphone 2E to a memory unit 37 via a microphone input unit 35 and an audio filter unit 36.

Likewise, while the hook-portion data A1, B1, or C1 is subjected to partial reproduction processing, if the musical composition appeals to a user, the home audio equipment 2 adopts a user's hand motion as a trigger of switching from partial reproduction processing to whole reproduction processing. The hand motion is photographed in advance using a camera 39 externally connected to the main unit 2A.

The camera 39 transmits a picture, which is produced by photographing the user's hand motion, to a motion sensor unit 40. The motion sensor unit 40 analyzes the user's hand motion on the basis of the picture, produces video data that may be used as a reference suitable for a trigger, and stores the video data in the memory unit 37.

In the home audio equipment 2, while partial reproduction processing is sequentially performed on the hook-portion data items A1, B1, and C1, a video/audio collation processing unit 38 compares finger-snap data, which is newly collected using the microphone 2E, with the reference stored in the memory unit 37. If a decision is made that the finger-snap data squares with the reference, the finger-snap data is recognized as a trigger in order to switch from partial reproduction processing to whole reproduction processing.

Likewise, while partial reproduction processing is sequentially performed on the hook-portion data items A1, B1, and C1, if the video/audio collation processing unit 38 decides that video data of a user's hand motion newly photographed by the camera 39 squares with the reference stored in the memory unit 37, the home audio equipment 2 recognizes the hand motion as a trigger and switches from partial reproduction processing to whole reproduction processing.

### (4) Automatic hook portion reproduction processing procedure

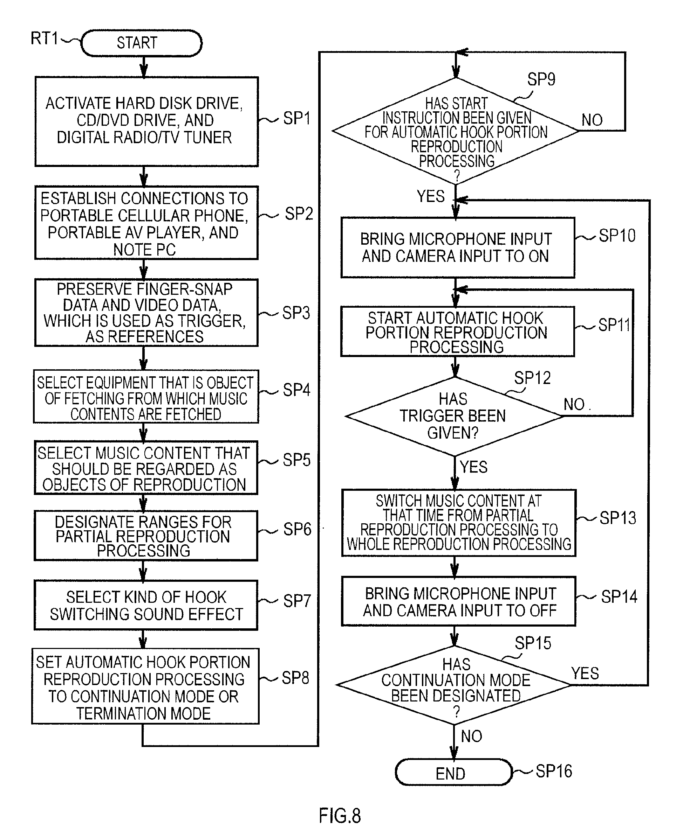

Referring to the flowchart of Fig. 8, a description will be made of an automatic hook portion reproduction processing procedure in the home audio equipment 2, which has the foregoing configuration, for performing partial reproduction processing on the hook-portion data items A1, B1, and C1, and switching from partial reproduction processing to whole reproduction processing responsively to a trigger, which is given by a user, according to the aforesaid automatic reproduction processing program.

The control microcomputer 11 of the home audio equipment 2 enters a routine RT1 at a start step, proceeds to the next step SP1, activates the hard disk drive 14, CD/DVD drive 15, and digital radio/TV tuner 17 which are incorporated in the main unit 2A, and then proceeds to the next step SP2.

At step SP2, the control microcomputer 11 establishes the connections to the portable cellular phone 3, portable AV player 4, and note PC 5 via the external connection interface 16, and proceeds to the next step SP3.

At step SP3, the control microcomputer 11 preserves as references user's finger snap data and video data of a photographed user's hand motion, which are used as a trigger for switching from partial reproduction processing on the hook-portion data items A1, B1, and C1 to whole reproduction processing, and proceeds to the next step SP4.

At step SP4, the control microcomputer 11 selects object-of-fetching equipment, which is an object from which music contents are fetched, from among the pieces of equipment, which are connected to the main unit 2A, according to an instruction which a user enters using the operating keys 2C, and then proceeds to the next step SP5.

At step SP5, the control microcomputer 11 selects a group of music contents, which should be regarded as objects of reproduction, from among the plural contents on the basis of an attribute such as a genre, artist, or category which the user enters using the operating keys 2C, and then proceeds to the next step SP6.

At step SP6, the control microcomputer 11 designates, as shown in Fig. 2, temporal ranges for partial reproduction processing (from a reproduction initiating position to a reproduction terminating position) in the group of music contents A to C, which is selected as objects of reproduction at step SP5, as the hook-portion data items A1 to C1 of the music contents A to C, and then proceeds to the next step SP7.

At step SP7, the control microcomputer 11 designates the kind of hook switching sound effect SAB1, which should be inserted among the hook-portion data A1, hook-portion data B1, hook-portion data C1, etc, designated at step SP6, as, for example, a special sound effect derived from, for example, cross-fade according to an instruction which the user gives using the operating keys 2C, and then proceeds to the next step SP8.

At step SP8, since there are a continuation mode in which after partial reproduction processing performed on the hook-portion data items A1, B1, and C1 is switched into whole reproduction processing, when the whole reproduction processing is completed, the partial reproduction processing is resumed and continued, and a termination mode in which when the whole reproduction processing is completed, the partial reproduction processing is not resumed but the entire automatic hook portion reproduction processing procedure of the routine RT1 is terminated, the control microcomputer 11 designates either the continuation mode or termination mode according to a manipulation the user performs on the operating keys 2C, and then proceeds to the next step SP9.

At step SP9, the control microcomputer 11 decides based on a manipulation, which the user performs on the operating keys 2C, whether or not an instruction of starting automatic hook portion reproduction processing is given. When obtaining a negative result, the control microcomputer 11 waits until the start instruction is given. When obtaining a positive result, the control microcomputer 11 proceeds to the next step SP10.

At step SP10, the control microcomputer 11 brings the microphone input of the microphone 2E and the camera input of the camera 39, via which a sound generated when a user snaps his/her fingers or a hand motion which serves as a trigger for switching from partial reproduction processing performed on the hook-portion data items A1, B1, and C1 to whole reproduction processing is recognized, to ON, and then proceeds to the next step SP11.

At step SP11, the control microcomputer 11 starts automatic hook portion reproduction processing by sequentially reproducing and outputting the hook portions of the group of music contents, which are selected at step SP5 and should be regarded as objects of reproduction, and then proceeds to the next step SP12.

The control microcomputer 11 of the home audio equipment 2 sequentially reproduces the hook-portion data items A1 to C1 by inserting the hook switching sound effect SAB1 as an inserted content among tunes according to the contents of designation for automatic hook portion reproduction processing shown in Fig. 2 in such order as the hook switching sound effect SAB1, hook-portion data A1, hook switching sound effect SAB1, hook-portion data B1, hook switching sound effect SAB1, hook-portion data C1, hook switching sound effect SAB1, etc.

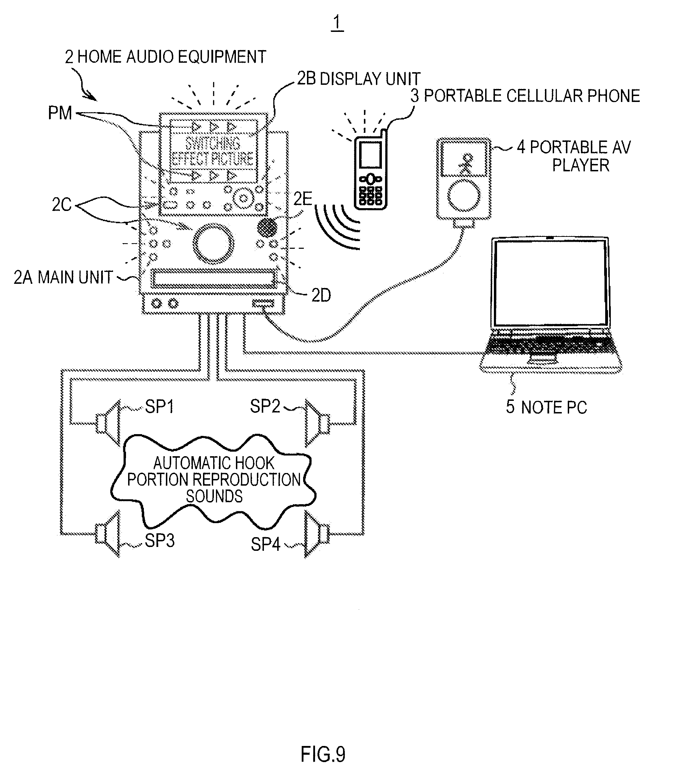

Concurrently, at the same timing as the output timing of the hook switching sound effect SAB1, the control microcomputer 11 of the home audio equipment 2 displays, as shown in Fig. 9, a predetermined hook switching effect picture on the display unit 2B of the main unit 2A, flickers a reproduction mark PM, flickers the various operating keys 2C, and flickers, for example, the portable cellular phone 3 that owns the music content relevant to the hook-portion data A1 being reproduced.

Accordingly, since the control microcomputer 11 of the home audio equipment 2 flickers the display unit 2B of the main unit 2A, the operating keys 2C, and the portable cellular phone 3 during reproduction and output of the hook switching sound effect SAB1 between the hook-portion data A1 and subsequent hook-portion data B1, the entertaining nature is visually improved, and a user is prompted to discern the switching into the hook portion of the subsequent music content.

At step SP12 (Fig. 8), during partial reproduction processing performed on the hook-portion data items A1, B1, and C1, the control microcomputer 11 compares finger-snap data newly collected using the microphone 2E, or video data newly photographed using the camera 39 with the reference stored in advance in the memory unit 37, and decides whether or not the trigger for switching from partial reproduction processing to whole reproduction processing has been given.

If a negative result is obtained, it means that: the finger-snap data newly collected using the microphone 2E or video data newly photographed using the camera 39 does not square with the reference in the memory unit 37; and a trigger has not been given by a user. At this time, the control microcomputer 11 returns to step SP11, and continues partial reproduction processing performed on the hook-portion data items A1, B1, and C1.

In contrast, if a positive result is obtained at step SP12, it means that: the finger-snap data newly collected using the microphone 2E or video data newly photographed using the camera 39 squares with the reference in the memory unit 37; and the trigger for switching from partial reproduction processing performed on the hook-portion data items A1, B1, and C1 to whole reproduction processing has been given. The control microcomputer 11 then proceeds to the next step SP 13.

At step SP13, the control microcomputer 11 switches to whole reproduction processing so as to reproduce on a full-length basis any of the hook-portion data items A1, B1, and C1 on which partial reproduction processing is performed when the trigger is given, and then proceeds to the next step SP14.

At step SP14, the control microcomputer 11 brings the microphone input of the microphone 2E and the camera input of the camera 39 to OFF, and then proceeds to the next step SP15.

At step SP15, when whole reproduction processing performed on any of the music contents A to C is completed, the control microcomputer 11 decides whether or not the continuation mode out of the continuation mode and termination mode has been designated at step SP8.

If a positive result is obtained, it means that the continuation mode in which when whole reproduction processing performed on any of the music contents A to C is completed, partial reproduction processing is automatically resumed and continued has been selected by a user. The control microcomputer 11 returns to step SP10, and autonomously repeats the foregoing pieces of processing so as to execute partial reproduction processing on the hook-portion data items A1, B1, and C1.

In contrast, if a negative result is obtained at step SP15, it means that the termination mode in which when whole reproduction processing performed on any of the music contents A to C is completed, partial reproduction processing will not be resumed but automatic hook portion reproduction processing is terminated has been selected by a user. The control microcomputer 11 proceeds to the next step SP16, and terminates all pieces of processing.

### (5) Automatic hook portion reproduction processing procedure for inserting a hook switching sound effect that matches a content genre

Next, a description will be made of an automatic hook portion reproduction processing procedure for selecting and inserting a hook switching sound effect SAB, the contents of which match the content genre of a subsequent hook-portion data, at the timing at which preparations for reproduction of the subsequent hook-portion data have been made.

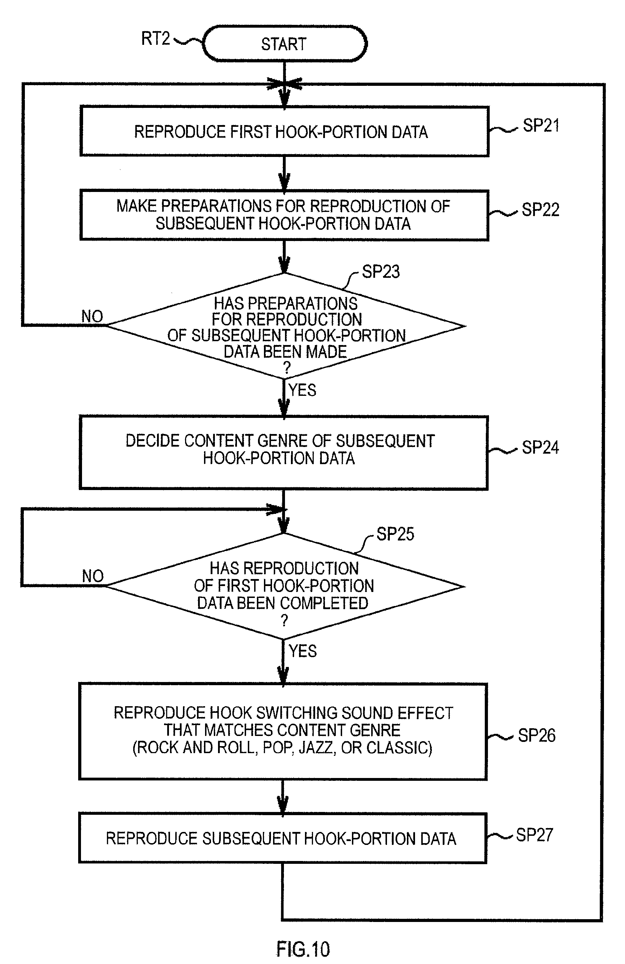

As shown in Fig. 10, the control microcomputer 11 of the home audio equipment 2 enters a routine RT2 at a start step, proceeds to the next step SP21, reproduces the hook-portion data A1 of, for example, the first music content A, and then proceeds to the next step SP22.

At step SP22, the control microcomputer 11 makes preparations for reproduction of the hook-portion data B1 of the subsequent music content B while reproducing the first hook-portion data A1, and then proceeds to the next step SP23.

What is referred to as preparations for reproduction is processing necessary to specify the hook-portion data B1 in the subsequent music content B, and sample it according to the aforesaid 12-tone analysis technology. Since the contents of the music content A are different from the contents of the music content B, a time required for the preparations for reproduction is expected to be different between the music contents A and B.

At step SP23, the control microcomputer 11 decides whether preparations for reproduction necessary to reproduce the subsequent hook-portion data B1 has already been made. If a negative result is obtained, it means that a state in which the subsequent hook-portion data B1 can be immediately reproduced has not been attained. The control microcomputer 11 returns to step SP21, and continues reproduction processing on the hook-portion data A1.

In contrast, if a negative result is obtained at step SP23, it means that a state in which the subsequent hook-portion data B1 can be immediately reproduced has been attained, that is, preparations for reproduction have been completed. The control microcomputer 11 proceeds to the next step SP24.

At step SP24, since the preparations for reproduction of the subsequent hook-portion data B1 have been completed, the control microcomputer 11 reads metadata appended to the music content B so as to decide whether the content genre is a rock and roll, pop, jazz, or classic, and then proceeds to the next step SP25.

At step SP25, the control microcomputer 11 decides whether reproduction processing on the first hook-portion data A1 started at step SP21 has entirely been completed. If a negative result is obtained, it means that reproduction processing on the first hook-portion data A1 has not been completed. The control microcomputer 11 returns to step SP25 and waits until the reproduction processing is completed.

In contrast, if a positive result is obtained at step SP25, it means that: the reproduction processing on the first hook-portion data A1 has been entirely completed; and the timing of reproducing a hook switching sound effect SAB, which matches the content genre, before starting reproduction processing on the subsequent hook-portion data B1 has come. The control microcomputer 11 proceeds to the next step SP26.

At step SP26, the control microcomputer 11 selects and reproduces the hook switching sound effect SAB (any of the hook switching sound effects SAB1 to SAB4) that matches the content genre of the subsequent hook-portion data B1 decided at step SP24 (a rock and roll, pop, jazz, or classic), and then proceeds to the next step SP27.

At step SP27, the control microcomputer 11 begins the reproduction processing on the subsequent hook-portion data B1 at the completion timing of the hook switching sound effect SAB reproduced at step SP26, and returns back to step SP21.

As mentioned above, when reproducing the subsequent hook-portion data B1 after reproducing the hook-portion data A1, the control microcomputer 11 of the home audio equipment 2 can select and reproduce the hook switching sound effect SAB (any of the hook switching sound effects SAB1 to SAB4) in line with the content genre read from metadata appended to the music content B of the hook-portion data B1.

Accordingly, when switching from the first hook-portion data A1 to the subsequent hook-portion data B1, the control microcomputer 11 of the home audio equipment 2 can allow a user to listen to the hook switching sound effect SAB whose contents are consistent with the content genre of the subsequent hook-portion data B1. Therefore, the control microcomputer 11 can allow the user to sequentially recognize the hook-portion data items A1, B1, C1, etc. in a stream while allowing the user to imagine the subsequent hook-portion data B1.

### (6) Actions and advantage

In the foregoing configuration, the home audio equipment 2 of the home audio system 1 can select as equipment, which can output music contents, not only the hard disk drive 14, CD/DVD drive 15, and digital radio/TV tuner 17, which are incorporated in the main unit 2A, but also the portable cellular phone 3, portable AV player 4, and note PC 5 which are connected via the external connection interface 16.

After selecting equipment capable of outputting music contents, the home audio equipment 2 selects a group of music contents, which should be regarded as objects of reproduction, from among plural contents on the basis of an attribute such as a genre, artist, or category. Thus, a time elapsing until a user encounters a music content, which meets the user's likes, from among the group of music contents that is objects of reproduction can be shortened.

As shown in Fig. 2, when reproducing the music contents A to C that are objects of reproduction, the home audio equipment 2 does not reproduce the music contents on a full-length basis but orderly sorts the hook-portion data A1, hook-portion data B1, and hook-portion data C1, inserts, for example, the hook switching sound effect SAB1 of about two sec long as an inserted content, which exerts a user-desired effect, into each of breaks among the hook-portion data items A1 to C1, and thus carries out automatic hook portion reproduction processing.

Therefore, the home audio equipment 2 can allow a user to sequentially listen to the reproduced sounds of the hook-portion data items A1 to C1 without persuading the user to perform any special manipulation. The home audio equipment 2 can allow the user to encounter an unexpected music content for a short period of time, or to discover a music content which the user potentially wants to listen to, though the user does not recognize the fact.

Owing to the automatic hook portion reproduction processing by the home audio equipment 2, the user can come across a music content, which meets the user's likes, from among numerous music contents for a short period of time. At this time, the user has to merely snap his/her fingers or move his/her hand.

As a result, the home audio equipment 2 recognizes a snap of user's fingers as a trigger or recognizes a specific user's hand motion as a trigger, the home audio equipment 2 can switch a music content, which meets the user's likes, from partial reproduction processing to full-length reproduction processing (whole reproduction processing).

Since the home audio equipment 2 allows a user to listen to the hook switching sound effect SAB1 serving as an inserted content inserted into each of the breaks among the hook-portion data items A1 to C1, the home audio equipment 2 can give various impressions to the user according to the kind of sound effect that is the hook switching sound effect SAB 1. In addition, the hook-portion data items A1 to C1 can be provided as a continuous and streamy content but are not outputted mutually separately with a blank portion interposed between adjoining ones of the hook-portion data items A1 to C1.

According to the foregoing constitution, since the home audio equipment 2 performs partial reproduction processing on the hook portion data items A1 to C1 of the group of music contents A to C that are objects of reproduction, the home audio equipment 2 can allow a user to recognize what the group of music contents A to C is for a short period of time.

The home audio equipment 2 allows a user to listen to the hook switching sound effect SAB1 that is an inserted content inserted into each of the breaks among the hook-portion data items A1 to C1. Therefore, the home audio equipment 2 can provide the results of reproduction processing on the hook-portion data items A1 to C1 as a content, which is streamy and has blank portions among the hook-portion data items A1 to C1 filled, without boring the user.

Thus, the home audio equipment 2 can allow a user to enjoyably select a music content, which meets the user's potential likes, for a short period of time by performing automatic hook portion reproduction processing without stressing the user.

### (7) Other embodiments

In the aforesaid embodiment, a description has been made of a case where only the hook-portion data items A1 to C1 relevant to the group of music contents A to c that are objects of reproduction are subjected to partial reproduction processing.

However, the present invention is not limited to this case. Alternatively, so-called introduction-portion data items relevant to the group of music contents A to C may be subjected to partial reproduction processing, so that a music content which meets user's likes can be readily found from among numerous music contents for a short period of time.

In the aforesaid embodiment, a description has been made of a case where a time interval of each of the breaks among the hook-portion data items A1 to C1 is set to about two seconds. The present invention is not limited to this case. Alternatively, the time interval may be set to an arbitrary time interval that meets user's likes.

Further, in the aforesaid embodiment, a description has been made of a case where as object-of-fetching equipment from which music contents are fetched, the portable cellular phone 3, portable AV player 4, or note PC 5 is connected to the home audio equipment 2.

However, the present invention is not limited to the above case. Alternatively, a hard disk recorder, game equipment, and other various devices capable of reproducing music contents or video contents may be connected to the home audio equipment 2.

In the aforesaid embodiment, a description has been made of a case where the home audio equipment 2 sequentially performs partial reproduction processing on the hook-portion data items A1 to C1 relevant to the group of music contents A to C selected as objects of reproduction. The present invention is not limited to this case. The hook-portion data items A1 to C1 relevant to the group of music contents A to C may be randomly subjected to partial reproduction processing.

In the aforesaid embodiment, a description has been made of a case where an object of automatic hook portion reproduction processing is music contents. The present invention is not limited to this case. The object of automatic hook portion reproduction processing may be video contents.

In this case, the home audio equipment 2 does not perform automatic hook portion reproduction processing like the one performed on music contents, but performs automatic characteristic scene picture reproduction processing of sequentially reproducing characteristic scene pictures (motion pictures) of video contents.

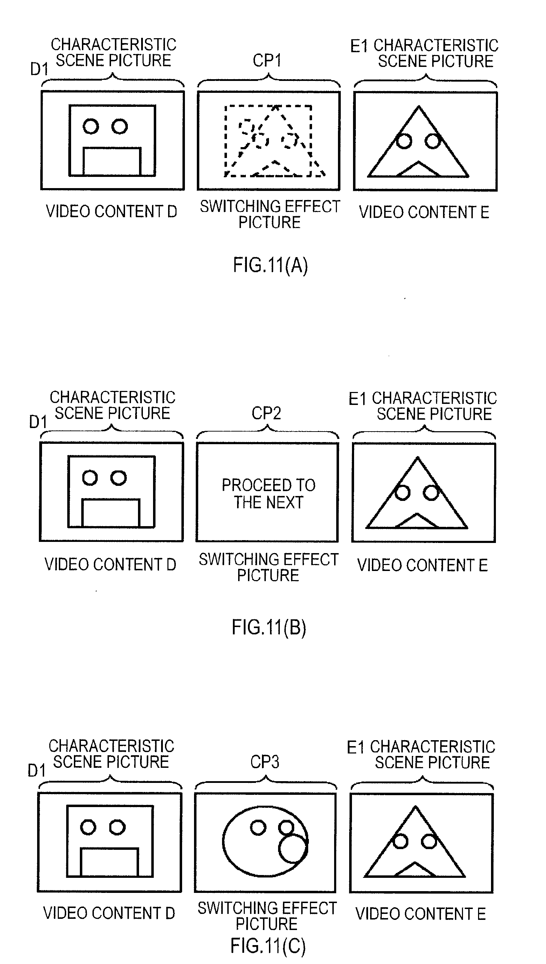

For example, as shown in Fig. 11 (A), as a switching effect picture CP1 (motion picture) to be inserted as an inserted content between a characteristic scene picture D1 of a video content D and a characteristic scene picture E1 of a subsequent video content E, a special-effect picture derived from cross-fade is conceivable for instance.

The cross-fade provides a special-effect picture to be used to fade in the picture of the subsequent characteristic scene picture E1 while fading out the picture of the characteristic scene picture D1. For a user, it is hard to recognize a time point at which the characteristic scene picture D1 is switched into the characteristic scene picture E1. The user therefore has the impression that the pictures are unknowingly switched.

As shown in Fig. 11(B), as a switching effect picture CP2 to be inserted as an inserted content between the characteristic scene picture D1 and characteristic scene picture E1, a still image bearing a user-designated caption (saying "Proceed to the next.") is conceivable.

In this case, switching from the characteristic scene picture D1 to the subsequent characteristic scene picture E1 can be discerned by a user owing to the switching effect picture CP2 that is the still image bearing the caption.

As shown in Fig. 11(C), as a switching effect picture CP3 to be inserted as an inserted content between the characteristic scene picture D1 and characteristic scene picture E1, a still image which a user fetches from an arbitrary video content or a motion picture the user has photographed by himself/herself is conceivable.

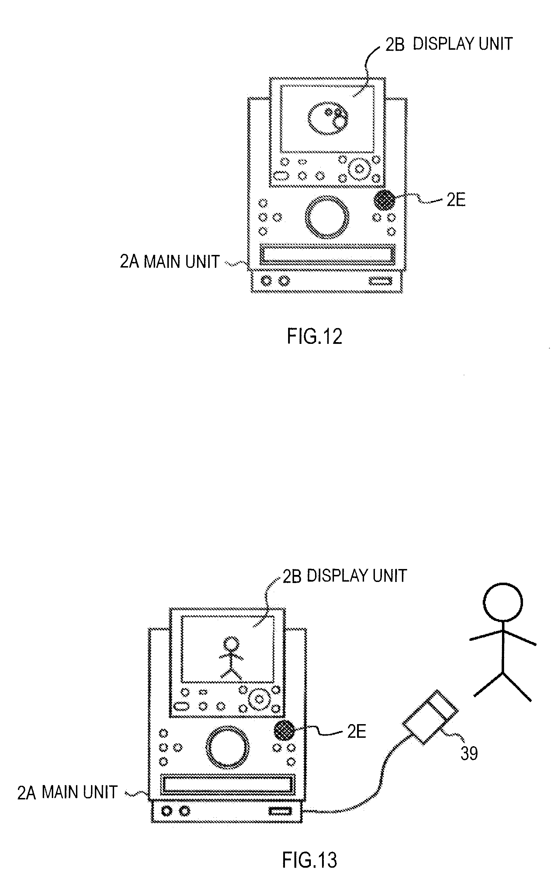

In reality, as shown in Fig. 12, when a scene in a video content is displayed on the display unit 2B of the home audio equipment 2, a still image in which a user's favorite scene is pre-set, or a motion picture produced, as shown in Fig. 13, through photography performed with the camera 39 externally connected to the main unit 2A may be adopted as the switching effect picture CP3.

In this case, since the picture of the switching effect picture CP3 that is a still image or a motion picture is outputted during switching from the characteristic scene picture D1 to the subsequent characteristic scene picture E1, the home audio equipment 2 can provide the pictures as a result of reproduction that is continuous and streamy and that has the blank portion between the characteristic scene picture D1 and characteristic scene picture E1 filled with the picture.

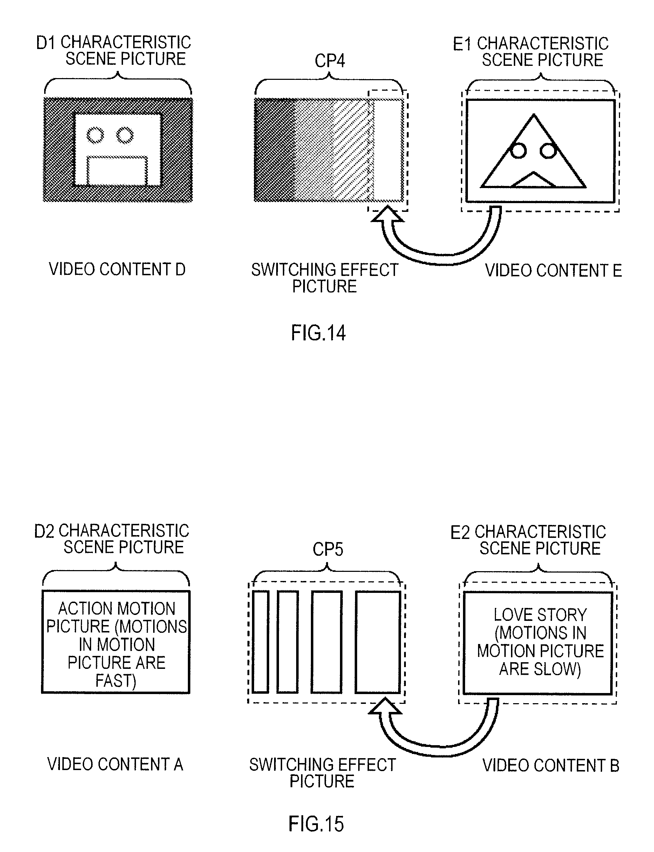

As shown in Fig. 14, as a switching effect picture CP4 to be inserted as an inserted content between the characteristic scene picture D1 of the video content D and the characteristic scene picture E1 of the subsequent video content E, a special-effect picture having tones changed is conceivable for instance.

More particularly, the background of the characteristic scene picture D1 has a blackish tone, and the background of the characteristic scene picture E1 has a whitish tone. As the switching effect picture CP4, a motion picture providing the effect of gradually changing from the blackish tone to the whitish tone is conceivable.

Even in this case, the home audio equipment 2 allows a user to discern the process of gradually changing from the tone of the characteristic scene picture D1 to the tone of the subsequent characteristic scene picture E1 via the switching effect picture CP4 instead of instantaneously switching from the characteristic scene picture D1 to the subsequent characteristic scene picture E1. Thus, the home audio equipment 2 allows the user to recognize the switching of pictures and imagine that the characteristic scene picture E1 having the whitish tone will come next.

As shown in Fig. 15, as a switching effect picture CP5 to be inserted as an inserted content between a characteristic scene picture D2 of the video content D and a characteristic scene picture E2 of the video content E, a special-effect picture for gradually changing from a scene, in which the moving speed of a subject is high, to a scene in which the moving speed of the subject is low is conceivable as an example of a result of motion-picture reproduction.

More particularly, the characteristic scene picture D2 is an action content and a motion picture including many scenes in which the moving speed of a subject is high, while the characteristic scene picture E2 is a love-story content and a motion picture including many scenes in which the moving speed of a subject is low. Therefore, the switching effect picture CP5 is a motion picture that begins with scenes in which the moving speed of a subject is high, and that gradually changes from the scenes to scenes in which the moving speed is low.

Even in this case, the home audio equipment 2 allows a user to discern the process of gradually changing from the scene in which the moving speed of a subject is high to the scene, in which the moving speed is low, via the switching effect picture CP5 instead of instantaneously changing from the characteristic scene picture D2 to the subsequent characteristic scene picture E2. The home audio equipment 2 thus allows the user to recognize the switching of pictures and allows the user to imagine that the characteristic scene picture E2, which includes scenes in which the moving speed is high, will come next to the characteristic scene picture D2 including scenes in which the moving speed is low.

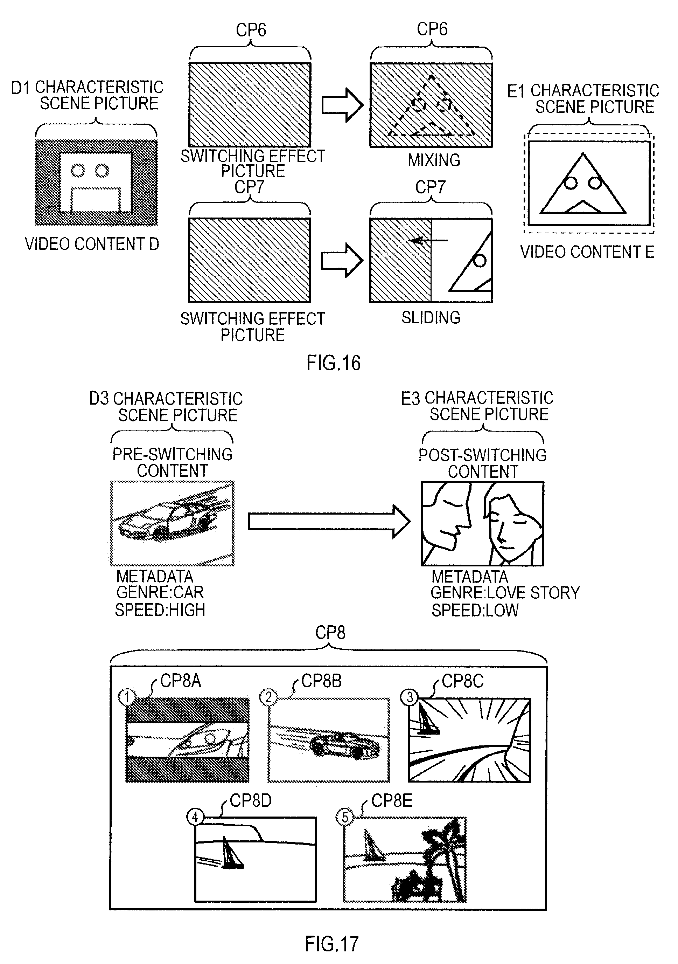

Further, as shown in Fig. 16, as a switching effect picture CP6 to be inserted as an inserted content between the characteristic scene picture D1 of the video content D and the characteristic scene picture E1 of the subsequent video content E, a special-effect picture to be produced by mixing the first scene of the characteristic scene picture E1 in a solid picture having a predetermined color so that the characteristic scene picture E1 will fade in with the passage of time is conceivable.

Further, as a switching effect picture CP7 to be inserted as an inserted content between the characteristic scene picture D1 of the video content D and the characteristic scene picture E1 of the subsequent video content E, a special-effect picture produced by performing insertion processing while sliding the first scene of the characteristic scene picture E1 from right to left with respect to a solid picture having a predetermined color so that the characteristic scene picture E1 will gradually appear from the right with the passage of time is conceivable.

Finally, as shown in Fig. 17, as a switching effect picture CP8 to be inserted as an inserted content between a characteristic scene picture D3 of the video content D and a characteristic scene picture E3 of the subsequent video content E, a picture having such contents as to express that the characteristic scene picture D3 of "an automobile" is naturally shifted to the characteristic scene picture E3 of "a love story" is conceivable.

For example, the home audio equipment 2 selects a scene image CP8A, with which "the headlights of an automobile" are imagined, and a scene image CP8B, with which "the running automobile" is imagined, from the characteristic scene picture D3 in response to a user's instruction.

The home audio equipment 2 selects a scene image CP8D, with which "a yacht cruising on the sea" is imagined, and a scene image CP8E, with which "lovers watching the sea" are imagined, from the characteristic scene picture E3 in response to a user's instruction.

Thereafter, the home audio equipment 2 produces a scene image CP8C, which is an image in which the scene image CP8B with which "the running automobile" is imagined, and the scene image CP7D with which "the yacht cruising on the sea" is imagined are mutually fused, according to user's editing manipulations performed on the image data of the characteristic scene picture D3 and the image data of the characteristic scene picture E3.

Therefore, the home audio equipment 2 inserts the switching effect picture CP8, which includes the scene images CP8A to CP8E, between the first characteristic scene picture D3 and subsequent characteristic scene picture E3, and can thus express the process of naturally shifting from the characteristic scene picture D3 of "an automobile" to the characteristic scene picture E3 of "a love story" via the switching effect picture CP8.

Therefore, the home audio equipment 2 allows a user to recognize the switching from the characteristic scene picture D3 of "an automobile" to the characteristic scene picture E3 of "a love story" by means of the switching effect picture CP8, and to readily imagine the contents of the subsequent characteristic scene picture E3 with the continuity as a content maintained.

In this case, the home audio equipment 2 produces the switching effect video CP8 according to an instruction entered by a user or editing manipulations performed thereby. Alternatively, the home audio equipment 2 may produce the switching effect picture CP8 according to metadata items appended to the first video content D and the subsequent video content E respectively.

For example, assume that the characteristic scene picture D3 has metadata of "genre: car" and "motion-picture speed: high" appended thereto, and the subsequent characteristic scene picture E3 has metadata of "genre: love story" and "motion-picture speed: low" appended thereto.

In this case, the home audio equipment 2 acquires the metadata items of the first video content D and subsequent video content E, recognizes pieces of information on the "genre" and "motion-picture speed," and then samples the scene picture CP8A, with which "the headlights of an automobile" are imagined, and the scene picture CP8B, with which "the running automobile" is imagined, out of the characteristic scene picture D3 on the basis of the pieces of information.

Based on the pieces of information, the home audio equipment 2 samples the scene picture CP8D, with which "the yacht cruising on the sea" is imagined, and the scene picture CP8E, with which "the lovers watching the sea" are imagined, out of the characteristic scene picture E3.

Thereafter, the home audio equipment 2 selects the scene image CP8C, which is an image in which the scene image CP8B with which "the running automobile" is imagined and the scene image CP8D with which "the yacht cruising on the sea" is imagined are fused, from among images preserved in advance in the hard disk drive 14, and produces the switching effect picture CP8 composed of the scene images CP8A to CP8E.

In the foregoing embodiment, a description has been made of a case where the control microcomputer 11 of the home audio equipment 2 executes the automatic hook portion reproduction processing procedure (Fig. 8) of the routine RT1 and the automatic hook portion reproduction processing procedure (Fig. 10) for inserting a hook switching sound effect that matches a content genre according to an automatic reproduction processing program stored in the hard disk drive 14.

However, the present invention is not limited to the above case. Alternatively, the control microcomputer 11 of the home audio equipment 2 may execute the automatic hook portion reproduction processing procedures of the routines RT1 and RT2 according to an automatic reproduction processing program installed from a recording medium, an automatic reproduction processing program downloaded from the Internet, or an automatic reproduction processing program installed along any of other various routes.

In the aforesaid embodiment, a description has been made of a case where the home audio equipment 2 serving as a content reproduction apparatus in accordance with the present invention is constructed with the control microcomputer 11 serving as a content selection means, the AV content decoding units 20 and 27 serving as a partial reproduction processing means, the loudspeakers SP1 to SP4 serving as an output means, and the control microcomputer 11 serving as an insertion means.

However, the present invention is not limited to the above case. Alternatively, the content reproduction apparatus may be constructed with the content selection means, partial reproduction processing means, output means, and insertion means that are realized with other various components.

### Industrial Applicability

A description has been made of a case where a content reproduction apparatus and a content reproduction method in accordance with the present invention are applied to, for example, the home audio equipment 2 of the home audio system 1. The present invention is not limited to the case. Alternatively, the present invention can be applied to car audio equipment of a car audio system, audio equipment of an audio system for airplanes, and other various types of audio equipment.

### Description of Reference numerals

- 1: Home audio system
- 2: Home audio equipment
- 2A: Main unit
- 2B: Display unit
- 2C: Operating keys
- 2D: CD/DVD loading tray
- 2E: Microphone
- SP1 to SP4: Loudspeaker
- 3: Portable cellular phone
- 4: Portable AV player
- 5: Note PC
- 11: Control microcomputer
- 13: Key input unit
- 14: Hard disk drive
- 15: CD/DVD drive
- 16: External connection interface
- 17: Digital radio/TV tuner
- 18: Analog radio/TV tuner
- 19, 26: Function switch
- 20, 27: AV content decoding unit
- 21: DSP unit
- 22: Video/audio digital-to-analog converter
- 23: Electronic volume unit
- 24: Amplification unit
- 25: OSD driver unit
- 28, 37: Memory unit
- 29: Timer unit
- 30: Audio external input terminal
- 31: Video external input terminal
- 35: Microphone input unit
- 36: Audio filter unit
- 38: Video/audio collation processing unit
- 40: Motion sensor unit
- 41: Video filter unit

## Claims

1. A content reproduction apparatus comprising:
a content selection means for selecting a group of contents, which should be regarded as objects of reproduction, from among a plurality of contents;
a partial reproduction processing means for performing partial reproduction processing to sequentially reproduce parts of contents belonging to the group of contents;
an output means for sequentially outputting the results of reproduction performed on parts of the contents by the partial reproduction processing; and
an insertion means for inserting an inserted content, which exerts a user-desired effect, between part of each of the contents, which are sequentially reproduced by the partial reproduction processing means, and part of a subsequent content.

2. The content reproduction apparatus according to Claim 1, wherein the insertion means inserts a predetermined sound effect as the inserted content.

3. The content reproduction apparatus according to Claim 2, wherein the insertion means appends the sound effect, which has a tempo with which the contents of the subsequent content are imagined, as the inserted content.

4. The content reproduction apparatus according to Claim 1, wherein the insertion means appends a predetermined picture as the inserted content.

5. The content reproduction apparatus according to Claim 4, wherein the insertion means appends the picture, which is an image with which the contents of the subsequent content are imagined, as the inserted content.

6. The content reproduction apparatus according to Claim 5, wherein the insertion means appends the inserted content that includes the picture, which is an image with which the relic of the content is imagined, and the picture which is an image with which the contents of the subsequent content are imagined.

7. The content reproduction apparatus according to Claim 1, wherein when selecting the group of contents that should be regarded as objects of reproduction, the content selection means performs the selection on the basis of pieces of attribute information borne by tags of the contents.

8. The content reproduction apparatus according to Claim 1, further comprising a reproduction mode switching means that while the partial reproduction processing is being executed for parts of the contents, if a predetermined trigger is given by a user, switches the partial reproduction processing into whole reproduction processing on the basis of the trigger.

9. The content reproduction apparatus according to Claim 8, wherein the reproduction mode switching means switches the partial reproduction processing into the whole reproduction processing with a sound uttered by a user as the trigger.

10. The content reproduction apparatus according to Claim 8, wherein the reproduction mode switching means switches the partial reproduction processing into the whole reproduction processing with a user's hand motion as the trigger.

11. The content reproduction apparatus according to Claim 8, wherein when the whole reproduction processing is completed, the reproduction mode switching means autonomously resumes the partial reproduction processing.

12. The content reproduction apparatus according to Claim 8, wherein when the whole reproduction processing is completed, the reproduction mode switching means autonomously terminates without resuming the partial reproduction processing.

13. A content reproduction method comprising:
a content selection step at which a content selection means selects a group of contents, which should be regarded as objects of reproduction, from among a plurality of contents;
a partial reproduction processing step at which a partial reproduction processing means performs partial reproduction processing to sequentially reproduce parts of contents belonging to the group of contents;
an output step at which an output means sequentially outputs the results of reproduction performed on parts of the contents through the partial reproduction processing;
an insertion step at which an insertion means inserts an inserted content, which exerts a user-desired effect, between part of each of the contents, which are sequentially reproduced through the partial reproduction processing, and part of a subsequent content.
